# EUROPÄISCHE PATENTANMELDUNG

(11) **EP 1 753 272 A2**
(43) Veröffentlichungstag der Anmeldung: **14.02.2007**
(21) Anmeldenummer: 06014622.2
(22) Anmeldetag: 13.07.2006
(51) Int. Cl.: H05B 41/282, H05B 41/24

(54) **Schaltungsanordnung mit transformatorlosem Wandler mit Drossel für den gepulsten Betrieb von dielektrischen Barriere-Entladungslampen**

(30) Priorität: 20.07.2005 DE 102005034505
(71) Anmelder: Patent-Treuhand-Gesellschaft für elektrische Glühlampen mbH, 81543 München (DE)
(72) Erfinder: Kyrberg, Karl, 81371 München (DE); Rupp, Arnulf, 82041 Oberhaching (DE); Schallmoser, Oskar, 85521 Ottobrunn (DE)
(74) Vertreter: Raiser, Franz

(57) **Zusammenfassung**

Die erfindungsgemäße Schaltungsordnung umfasst einen Drosselwandler für den gepulsten Betrieb von dielektrisch behinderten Barriere-Entladungslampen (EL). Vorgeschlagen wird sowohl eine Halb- als auch eine Vollbrückenvariante. Durch die Wahl des Induktivitätswerts der Drossel (L) lässt sich die Flankensteilheit der Pulse beeinflussen, bei mehr als einer Drossel auch unabhängig für die ansteigende und abfallende Flanke.

## Beschreibung

### Technisches Gebiet

Die Erfindung betrifft eine Schaltungsanordnung mit einem transformatorlosen Wandler mit mindestens einer Drossel für den gepulsten Betrieb einer dielektrischen Barriere-Entladungslampe. Außerdem zielt die Erfindung auf ein Beleuchtungssystem mit dieser Wandlerschaltung und einer dielektrischen Barriere-Entladungslampe, sowie auf ein entsprechendes Betriebsverfahren.

Der Begriff "dielektrische Barriere-Entladungslampe" ist hier verallgemeinert zu verstehen, d.h. er beschränkt sich nicht nur auf die im für das menschliche Auge sichtbaren Bereich des elektromagnetischen Spektrums abstrahlende Lampen. Vielmehr sind hier auch Strahler auf der Basis der dielektrischen Barriere-Entladung umfasst, die zusätzlich oder sogar überwiegend außerhalb dieses Bereichs, insbesondere auch im Ultraviolett- und Vakuumultraviolett-Bereich, emittieren.

Aus elektrotechnischer Sicht haben dielektrische Barriere-Entladungslampen aufgrund der dielektrischen Barriere eine überwiegend kapazitive Charakteristik. Als einfaches Ersatzschaltbild wird deshalb üblicherweise eine Parallelschaltung aus einer ersten Kapazität und einer Reihenschaltung aus einer zweiten Kapazität und einem ohmschen Widerstand angenommen. Während die dielektrische Barriere-Entladungslampe noch ungezündet ist, ist der ohmsche Widerstand praktisch unendlich groß, d.h. es wirkt zunächst nur die erste Kapazität. Sobald die Lampe aber zündet, nimmt der ohmsche Widerstand einen endlichen Wert an und wirkt deshalb zusammen mit der seriellen zweiten Kapazität. Aufgrund der kapazitiven Komponente können dielektrische Barriere-Entladungslampe nur mit einer zeitlich veränderlichen Spannung, beispielsweise einer Sinusspannung, besonders bevorzugt gepulst im Sinne der US 5 604 410 betrieben werden.

Der erfindungsgemäße Drosselwandler dient dazu, dielektrische Barriere-Entladungslampen im Sinne der US 5 604 410 gepulst zu betreiben.

### Stand der Technik

Dielektrisch behinderte Barriere-Entladungslampen (auch als dielektrisch behinderte oder gelegentlich stille Entladungslampen bezeichnet) sind an sich bekannt, beispielsweise aus der US-A 5 994 849 oder der US-A 6 097 [155]. Sie müssen durch ein elektronisches Vorschaltgerät betrieben werden, das iterativ Hochspannungspulse an die Entladungslampe anlegen kann. Die Erfindung richtet sich jedoch auch auf Vorschaltgeräte für andere Lampentypen, die mit iterativ erzeugten Spannungspulsen betrieben werden können, und bei denen eine kapazitive Charakteristik wie bei dielektrisch behinderten Entladungen vorherrscht. Insofern ist der Begriff "dielektrische Barriere-Entladungslampe" auch als auf derartige Lampen verallgemeinert zu verstehen und umfasst insbesondere auch alle Entladungslampen, bei denen mindestens eine Elektrode außerhalb des Entladungsgefäßes angeordnet ist.

Aus der Schrift EP 0 927 506 B1 ist ein Klasse-E-Wandler, auch Sperrwandler genannt, für den gepulsten Betrieb von dielektrischen Barriere-Entladungslampen bekannt. Nachteilig ist, dass das benötigte Kernvolumen für den Transformator bzw. die Eingangsdrossel mit der Lampenleistung wächst. Außerdem ist der Bereich, innerhalb dem eine angeschlossene Lampe gedimmt werden kann, relativ gering.

### Darstellung der Erfindung

Die Aufgabe der vorliegenden Erfindung ist es, eine alternative Schaltungsanordnung für den gepulsten Betrieb von dielektrischen Barriere-Entladungslampen bereitzustellen.

Diese Aufgabe wird gelöst durch eine Schaltungsanordnung für das gepulste Betreiben einer Entladungslampe, insbesondere einer dielektrischen Barriere-Entladungslampe, mit einem Drosselwandler mit
o einem ersten und einem zweiten Schalterzweig,
   - wobei jeder Schalterzweig eine Serienschaltung aus Schalter, Stromventil und Induktivität umfasst,
o einem Lampenzweig, der eine mit dem Mittenpunkt der Serienschaltung verbundene Induktivität aufweist,
   - wobei der freie Anschluss dieser Induktivität für die Verbindung mit dem ersten Anschluss einer Entladungslampe (EL) vorgesehen ist,
o wobei bis zu zwei der insgesamt drei Induktivitäten (L, L1, L2) auch den Wert Null annehmen können.

Besonders vorteilhafte Ausgestaltungen finden sich in den abhängigen Ansprüchen.

Die Grundidee der Erfindung besteht darin, auf den Transformator der bisherigen Wandlerkonzepte für den gepulsten Betrieb von dielektrischen Barriere-Entladungslampen zu verzichten und statt dessen, die dielektrische Barriere-Entladungslampe direkt mit zumindest einer Induktivität zu speisen. Dabei wird die Lampe durch aktive Bauelemente für eine einstellbare Zeit mit einer Versorgungsspannung verbunden und anschließend bidirektional von dieser Versorgungsspannung getrennt. Außerdem erlaubt es die erfindungsgemäße Schaltungsanordnung, für eine einstellbare Zeit eine Spannung, die höher als die Versorgungsspannung sein kann, an die dielektrische Barriere-Entladungslampe zu legen.

Die erwähnte Induktivität ist erfindungsgemäß in der Regel durch eine Drossel realisiert, weshalb der Einfachheit halber im Folgenden der eingangs erwähnte Begriff "Drosselwandler" verwendet wird. Allerdings kann die besagte Induktivität unter Umständen auch durch die Induktivität der Lampenzuleitung realisiert sein, sofern die Leitungsinduktivität groß genug ist. Üblicherweise wird man aber zumindest eine zusätzliche Drossel benötigen.

Durch den Verzicht auf den Wandlertransformator hat man unter anderem einen Kostenvorteil, da Drosseln kostengünstiger als Transformatoren sind. Hinzu kommt noch die verbesserte Kompaktheit der Schaltungsanordnung aufgrund der typisch sechs bis zehn mal geringeren Abmessung der hier verwendeten Drosseln im Vergleich zu einem Transformator eines Klasse-E-Wandlers. Durch Wahl der Induktivität lassen sich mit dem erfindungsgemäßen Drosselwandler steilere Flanken der Spannungspulse erreichen ohne Kompromisse bei der Pulsbreite eingehen zu müssen. Höhere Zündspannungen gegenüber dem Klasse-E-Wandler können durch resonantes Aufschaukeln der Spannung erreicht werden. Schließlich ist keine vollständige Zwischenspeicherung der in die Lampe eingespeisten Energie in den induktiven Bauelementen nötig, da der Lampenstrom zeitweise der Spannungsversorgung entnommen wird. Deshalb können die induktiven Bauelemente in der erfindungsgemäßen Schaltungsanordnung kleiner dimensioniert werden. Die optionale Verwendung von mehr als einer Drossel bietet den Vorteil, die Anstiegs- und Abfallflanke des Spannungspulses an der Lampe unabhängig voneinander durch die entsprechenden Induktivitätswerte einstellen zu können. Dies und weitere Details sind bei der Beschreibung der Figuren näher erläutert.

Generell lässt sich die erfindungsgemäße Schaltungsanordnung grob in zwei Klassen einteilen. Die erste Variante nutzt für die Pulserzeugung prinzipiell zwei von einer elektrischen Versorgungsquelle gespeiste serielle Schalterzweige, die abwechselnd in der Art einer Halbbrücke geschaltet sind bzw. angesteuert werden und deshalb im Folgenden der Einfachheit halber als Halbbrücken-Drosselwandler bezeichnet wird. Jeder Schalterzweig enthält einen oder mehrere seriell geschaltete Schalter, beispielsweise steuerbare Halbleiterschalter wie Transistoren, insbesondere FET (Feldeffekttransistoren), IGBT (Insulated Gate Bipolar Transitor) und ähnliches. Durch die Serienschaltung mehrerer Schalter lässt sich der bei dieser Variante prinzipielle Nachteil der erforderlichen hohen Sperrspannungsfestigkeit mildern. Ansonsten sind hier hochsperrende Schalter erforderlich, die typisch ca. 2 kV Sperrspannung aushalten. Mit Hilfe des ersten Schalterzweiges wird die Entladungslampe kurzzeitig über eine Drossel mit der elektrischen Versorgung verbunden (Zustand des ersten Schalterzweiges: "Geschlossen"). Dabei fließt ein Strompuls durch Drossel und Lampe (solange die Lampe ungezündet ist als reiner Verschiebungsstrom). Danach wird die Lampe im Stromnulldurchgang wieder von der elektrischen Versorgung getrennt (Zustand des ersten Schalterzweiges: "Offen"). Anschließend - optional nach einer einstellbaren Pausenzeit - wird mit Hilfe des zweiten Schalterzweiges ein von der elektrischen Versorgungsquelle getrennter Stromkreis aus Lampe und Drossel geschlossen und es fließt ein Strompuls umgekehrter Polarität durch Drossel und Lampe. Danach wird dieser Stromkreis im Stromnulldurchgang wieder unterbrochen (Zustand des zweiten Schalterzweiges: "Offen", bei realen Schaltern, z.B. MOSFET mit integrierter Rücklaufdiode, "Rücksperrung" mittels seriellem Stromventil, z.B. Diode). Anschließend - optional nach einer einstellbaren Pausenzeit - wird die Lampe wieder über die Drossel mit der elektrischen Versorgung verbunden usw..

Die zweite Variante nutzt für die Pulserzeugung prinzipiell zwei mal zwei serielle Schalterzweige, wobei immer ein diagonales Schalterzweigepaar abwechselnd mit dem anderen diagonalen Schalterzweigepaar in der Art einer Vollbrücke angesteuert wird und deshalb im Folgenden der Einfachheit halber als Vollbrücken-Drosselwandler bezeichnet wird. In diesem Fall wird die Lampe also abwechselnd durch ein diagonales Schalterzweigepaar und über zumindest eine Drossel in wechselnder Polarität mit der elektrischen Versorgungsquelle verbunden. Die so erzeugten Strompulse wechselnder Polarität können - wie bei der Halbbrücken-Variante - optional durch eine einstellbare Pausenzeit voneinander getrennt sein. Bei der Vollbrücken-Variante ist die Spannungsbelastung des einzelnen Schalters entsprechend geringer, allerdings braucht man generell eben auch zwei Schalter mehr als bei der Halbbrücken-Variante. Ein weiterer Vorteil des Vollbrücken-Drosselwandlers gegenüber dem Halbbrücken-Drosselwandler ist die geringere Störstrahlung der dielektrischen Barriere-Entladungslampe, da bei entsprechender Bauteileauslegung nur geringere Störströme fließen.

Falls die Schalter in den Schalterzweigen durch Transistoren mit integrierter Freilaufdiode, beispielsweise MOSFETs, ausgeführt sind, ist in jeden Schalterzweig je ein Stromventil, das den Stromfluss nur in einer Richtung zulässt, beispielsweise eine Diode, seriell geschaltet. Auf diese Weise ist auch in diesem Fall im Schalterzustand "Öffnen" eine Sperrwirkung in beide Stromrichtungen sichergestellt.

### Kurze Beschreibung der Zeichnungen

Im Folgenden soll die Erfindung anhand von Ausführungsbeispielen näher erläutert werden. Die Figuren zeigen:
- Fig. 1: eine Prinzipschaltung einer ersten Variante des erfindungsgemäßen Halbbrücken-Drosselwandlers,
- Fig. 2a-e: ein Schaltschema für die Schaltung aus Fig. 1 sowohl für die Phase vor der Zündung als auch für den stationären Betrieb einer dielektrischen Barriere-Entladungslampe,
- Fig. 3: eine Prinzipschaltung einer zweiten Variante des erfindungsgemäßen Halbbrücken-Drosselwandlers,
- Fig. 4: ein konkretes Schaltungsbeispiel für die zweite Variante des erfindungsgemäßen Halbbrücken-Drosselwandlers,
- Fig. 5: den Zeitverlauf von Strom und Spannung für eine konkrete Dimensionierung des Schaltungsbeispiels aus Fig. 4,
- Fig. 6: den Zeitverlauf von Strom und Spannung für ein anders dimensioniertes Schaltungsbeispiel entsprechend Fig. 4,
- Fig. 7: eine erste Variante des erfindungsgemäßen Vollbrücken-Drosselwandlers,
- Fig. 8: das Schaltschema für den stationären Betrieb des Vollbrücken-Drosselwandlers aus Fig. 7,
- Fig.9: eine zweite Variante des erfindungsgemäßen Vollbrücken-Drosselwandlers,
- Fig. 10: eine dritte Variante des erfindungsgemäßen Vollbrücken-Drosselwandlers.

### Bevorzugte Ausführung der Erfindung

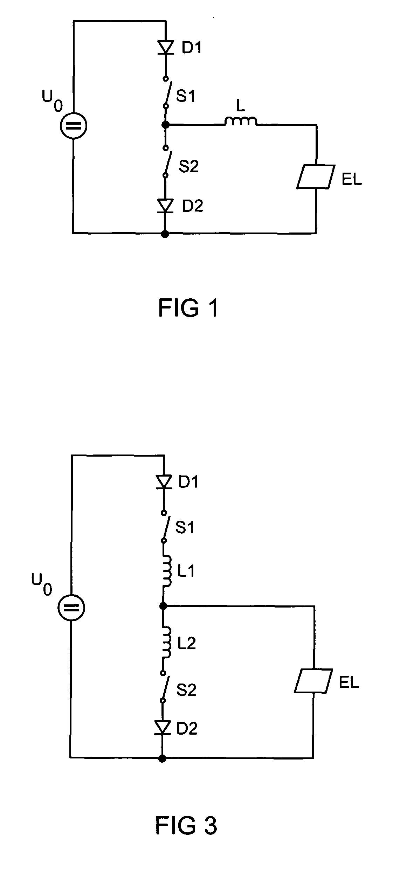

Die Figur 1 zweigt das Prinzipschaltbild einer ersten Variante des erfindungsgemäßen Halbbrücken-Drosselwandlers. Dieser weist zwei serielle Schalterzweige auf, die je ein Stromventil D1, D2, beispielsweise eine Diode, sowie einen Schalter S1, S2, beispielsweise einen Transistor, insbesondere einen Feldeffektransistor (FET) bzw. MOSFET umfassen. Der Mittenpunkt der Serienschaltung aus den beiden Schalterzweigen ist mit einem Lampenzweig verbunden, der eine Drossel L sowie eine dazu seriell geschaltete dielektrische Barriere-Entladungslampe EL umfasst. Der Lampenzweig ist parallel mit einem der beiden Schalterzweige verbunden. Für den Lampenbetrieb sind die Anschlüsse der Serienschaltung aus den beiden Schalterzweigen mit einer elektrischen Versorgungsquelle U₀ verbunden.

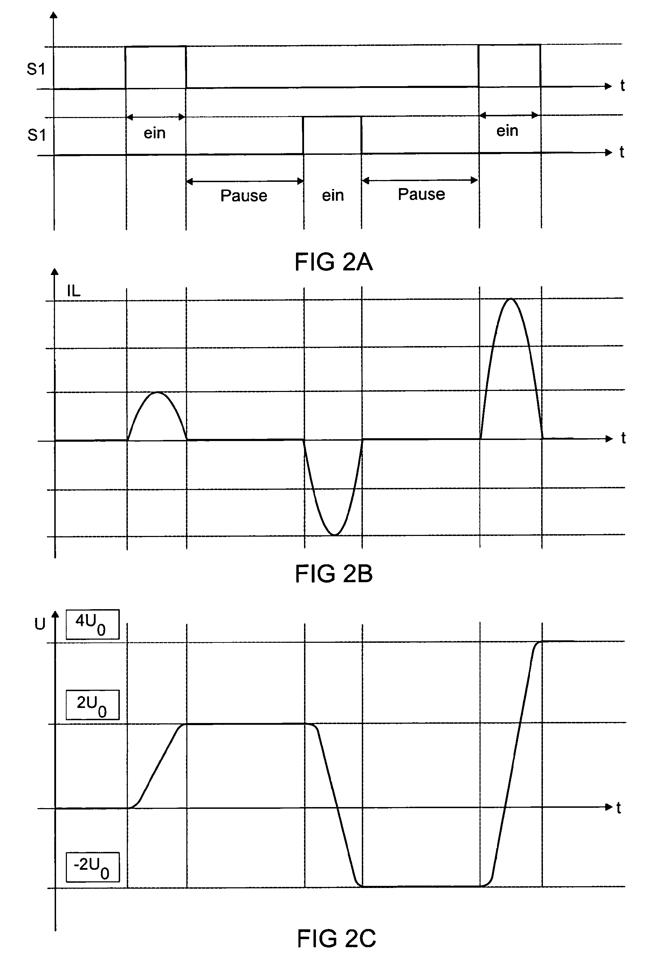

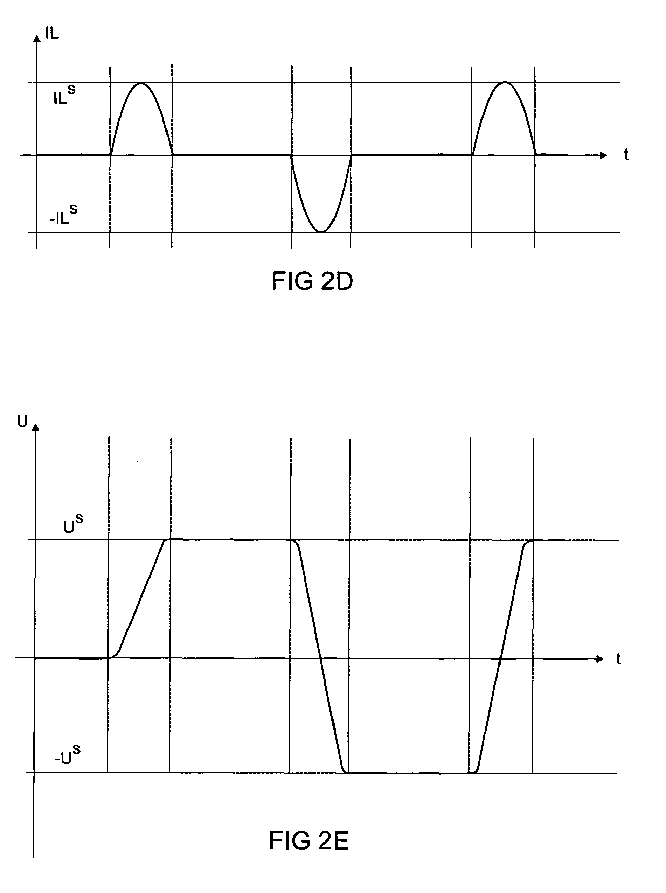

Für die Funktionsbeschreibung der in Fig. 1 gezeigten Prinzipschaltung wird im Folgenden zusätzlich Bezug auf die in den Figuren 2a - 2e dargestellten Signalverläufe genommen. Die Fig. 2a zeigt die Ansteuersignale der beiden Schalter S1 und S2. Wie Fig. 2b zeigt, kann nur während der "Ein-Zeiten", d.h. wenn genau einer der beiden Schalter S1, S2 geschlossen ist, ein pulsförmiger Strom I_{L} durch die Drossel L fließen. Während der "Pausenzeiten", d.h. wenn keiner der beiden Schalter S1, S2 geschlossen ist, fließt hingegen kein Strom durch die Drossel L. Entsprechend steigt die Spannung U an den Lampenanschlüssen beim erstmaligen Einschalten der Schaltung, d.h. wenn die dielektrische Barriere-Entladungslampe EL noch nicht gezündet ist und quasi als elektrischer Kondensator wirkt, an. Während der erste Schalter S1 geschlossen ist, steigt die Spannung U im Idealfall bis auf den doppelten Wert der Versorgungsspannung U₀. Danach bleibt die Spannung U während der Pausenzeit zunächst konstant, bis der zweite Schalter S2 schließt und folglich wieder ein pulsartiger Strom I_{L} durch die Drossel L fließt, nun aber mit gegenüber dem vorherigen Strompuls entgegen gesetzter Polarität. Folglich wechselt auch die Polarität der Lampenspannung U auf den negativen doppelten Wert der Versorgungsspannung U₀. Diese Spannung bleibt während der nachfolgenden Pausenzeit wieder solange konstant, bis wieder der erste Schalter S1 schließt und folglich die Polarität abermals wechselt. Diese Vorgänge wiederholen sich, so dass eine ansteigend rechteckförmige Spannung resultiert bzw. eine Strompulsfolge mit alternierender Polarität. Dabei nimmt die Amplitude der Strompulse I_{L} mit jedem Puls zu, die der Spannung mit jeder Periode. Dieses resonante Verhalten hält bis zur Zündung der dielektrische Barriere-Entladungslampe EL an. Zur Verkürzung dieser Phase bis zur Zündung kann es vorteilhaft sein, die Pausenzeit optional auf Null zu setzen, d.h. die beiden Schalter S1, S2 unmittelbar alternierend zu schließen und zu öffnen. Auf diese Weise entsteht eine resonante Strom- bzw. Spannungsschwingung. Durch den Verzicht auf die Pausenzeit bis zur Zündung der Lampe ist auch die Spannungsbelastung für die Schalter S1, S2 und die Dioden D1, D2 auf die Versorgungsspannung begrenzt. Solange die dielektrische Barriere-Entladungslampe EL noch nicht gezündet hat, fließt der Strompuls I_{L} als reiner Verschiebungsstrom durch die dielektrische Barriere-Entladungslampe EL, die ungezündet als reiner Kondensator wirkt. Sobald die dielektrische Barriere-Entladungslampe EL gezündet hat, ist es jedenfalls erfindungsgemäß vorgesehen, dass die Pausenzeit größer Null ist, um dadurch die eingangs erwähnte effiziente Betriebsweise dieser Lampen zu realisieren. Dieser stationäre Betriebszustand ist in der Figur 2d für den Strom I_{L} durch die Drossel L und in Fig. 2e für die Lampenspannung U dargestellt. Im stationären Betriebszustand "dämpft" die gezündete dielektrische Barriere-Entladungslampe EL die Schwingungsresonanz auf einen stationären Stromwert I_{L}^{s} bzw. Spannungswert U^{s}. Außerdem werden die Schalter S1, S2 generell im stromlosen Zustand geschaltet, so dass die Schaltverluste minimal sind. Zu diesem Zweck ist die Einschaltzeit länger als der Strompuls.

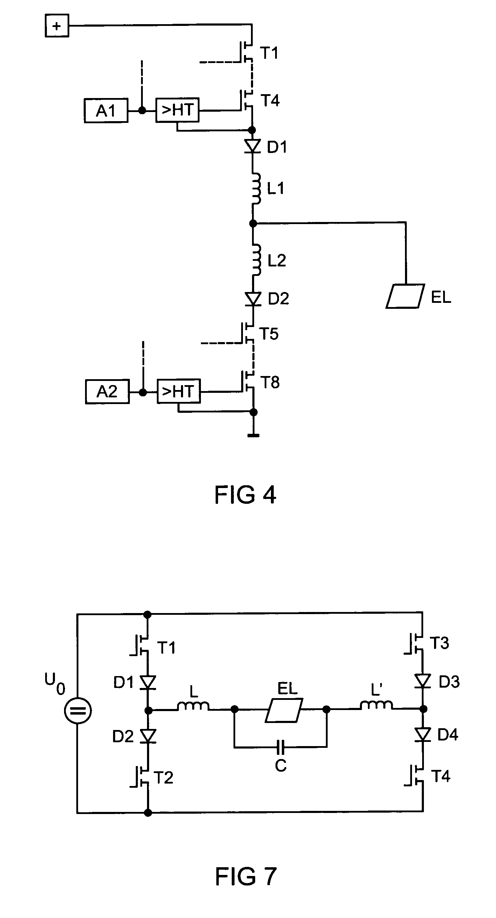

In der Fig. 3 ist eine Untervariante des in Fig. 1 beschriebenen Halbbrücken-Drosselwandlers dargestellt. Deren Funktion unterscheidet sich von der zuvor im Zusammenhang mit den Figuren 2a - 2e beschriebenen Funktion lediglich dadurch, dass für die alternierenden Strompulse und folglich für die Anstiegs- und Abfallflanke der Lampenspannung U nun zwei unterschiedliche Induktivitäten L1, L2 bestimmend sind. Zu diesem Zweck ist die Drossel L in Fig. 2 in die beiden Drosseln L1 bzw. L2 aufgespaltet und zudem in die beiden Schalterzweige des Halbbrücken-Drosselwandlers integriert, d.h. jeweils seriell zu Schalter und Diode. Durch die zweite Drossel erhält man also letztlich einen weiteren Freiheitsgrad zur Beeinflussung der Spannungsflanken. Schaltungstechnisch entspricht die Schaltung in Fig. 1 formal dem Fall, dass die beiden Induktivitätswerte L₁, L₂ der beiden Drosseln L1, L2 gleich sind, d.h. L₁ = L₂. Diese Untervariante zeigt gegenüber der in Fig. 1 dargestellten Variante eine erhöhte Betriebssicherheit.

Schließlich kann eine nicht dargestellte dritte Variante mit drei Drosseln als Kombination der in den Figuren 1 und 3 dargestellten Varianten aufgefasst werden.

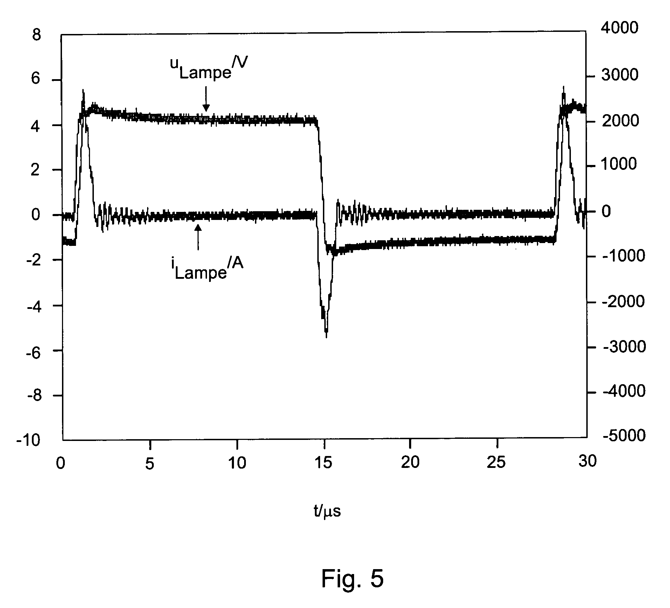

Die Fig. 4 zeigt ein konkretes Ausführungsbeispiel der in Fig. 3 dargestellten Prinzipschaltung der zweiten Variante des erfindungsgemäßen Halbbrücken-Drosselwandlers mit zwei Drosseln L1 und L2. Diese Schaltung ist für den Betrieb einer flachen dielektrischen Barriere-Entladungslampe vom Typ PLANON® (Fa. OSRAM GmbH; siehe z.B. Weblink im Internet: http://www.osram.de/ueber_uns/umwelt/produkte/planon.html#) mit einer Diagonale von 32" vorgesehen. Bei einer Systemleistung von ca. 213 W sind hiermit Leuchtdichten von 6310 Cd/m² und mehr realisierbar, bei einer Lichtausbeute von z.B. 8,3 Cd/W und mehr. Damit ist die mit dem erfindungsgemäßen Drosselwandler erzielte Lichtausbeute um ca. 30 % höher als mit einer gängigen Klasse-E-Wandlerschaltung. Jeder der beiden Schalterkreise umfasst als Schalter vier MOSFET (Metal Oxide Semiconductor Field Effect Transistor) T1 bis T4 bzw. T5 bis T8 vom Typ 17N80 COOLMOS (Fa. Infineon), um die einzelnen Transistoren nicht mit der hohen Eingangsspannung von ca. 1400 V belasten zu müssen. Außerdem haben diese Transistortypen geringe Durchlass- und Schaltverluste. Hier könnte zukünftig möglicherweise auch ein einziger Transistor pro Schalterzweig ausreichen, sobald entsprechend hochsperrende Schalttransistoren, beispielsweise in SiC(Siliziumcarbid)-Technologie, verfügbar sind. Wegen des Reverse-Recovery-Effekts (Dioden leiten den Strom für eine gewisse Zeitdauer auch in Sperrrichtung) sind die beiden Dioden D1, D2 ebenfalls in SiC-Technologie für eine Spannung von 1200 V und einem Strom von 5 A ausgelegt. Die beiden Drosseln L1, L2 haben hier die gleiche Induktivität von je 104 µH. Die vier Transistoren T1 bis T4 bzw. T5 bis T8 jedes Schalterzweiges werden mit je einem Ansteuerrechteckgenerator A1, A2 über je einen an sich bekannten Highside-Treiber HT pro Transistor angesteuert. In Figur 5 ist das zugehörige Zeitverlaufsdiagramm für den Lampenstrom i_{EL} in Ampere (A) und der Lampenspannung u_{EL} in Volt (V) dargestellt; die Einheit der Y-Achse ist Mikrosekunden (µs). Demnach haben die Strompulse eine Dauer von ca. 1 µs und eine Wiederholfrequenz von 36,36 kHz. Der Tastgrad beträgt 50 %. Die Effizienz der Schaltung beträgt dabei mehr als 85 %. In einem Überlastbetrieb der Schaltung aus Fig. 4 mit 752 W wird eine Leuchtdichte von mehr als 20 000 Cd/m² erreicht. Dazu wurden zwei gleiche Drosseln mit Induktivitätswerten von je 14 µH verwendet und ein Kondensator mit der Kapazität von 471 pF parallel zur Lampe geschaltet. Die Strompulse hatten eine Dauer von 0,6 µs bei einer Pulswiederholfrequenz von 67,8 kHz.

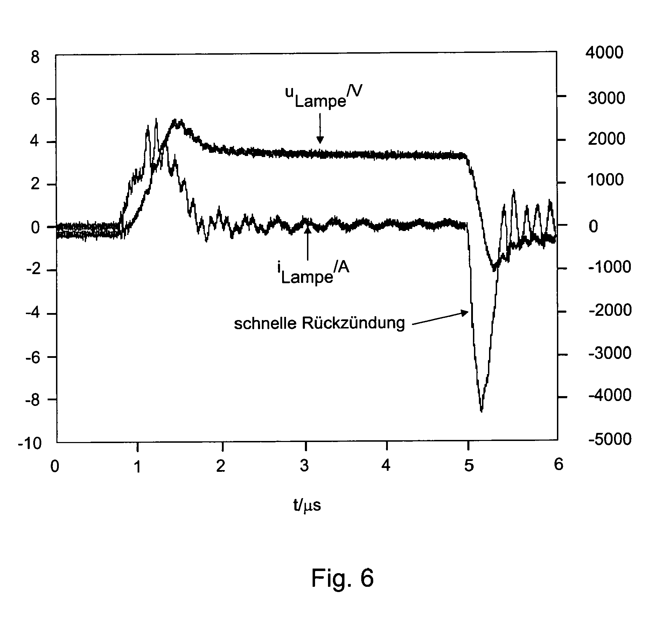

Die Figur 6 zeigt das entsprechende Zeitverlaufsdiagramm für ungleiche Induktivitätswerte für die beiden Drosseln L1 und L2, nämlich 104 µH bzw. 14 µH.

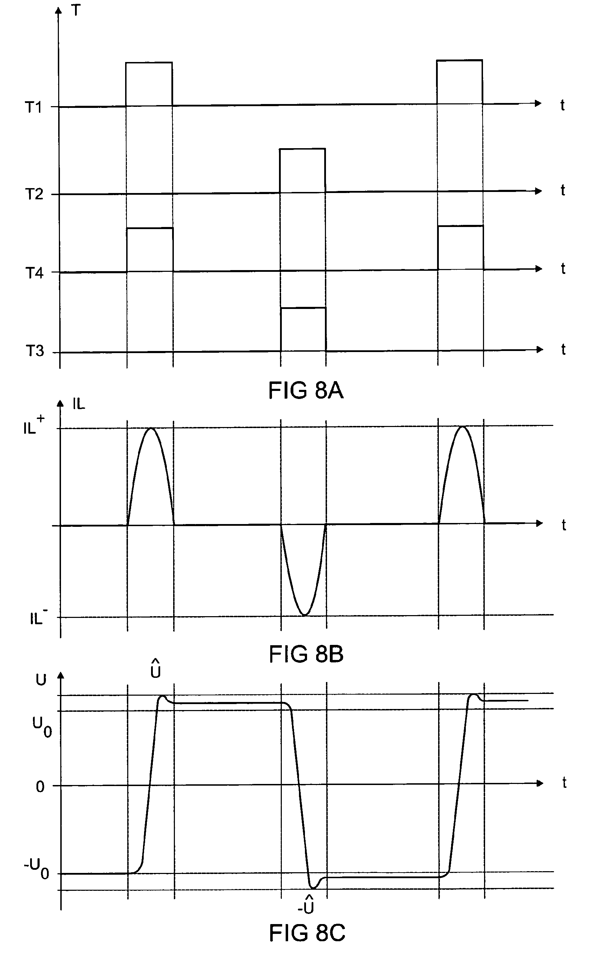

In Figur 7 ist eine erste Prinzipschaltung eines erfindungsgemäßen Vollbrücken-Drosselwandlers mit symmetrischer Topologie dargestellt. Die resultierende symmetrische Lampenspannung ist bei symmetrischem Aufbau der dielektrischen Barriere-Entladungslampe, d.h. bei gleicher Fläche der beiden dielektrisch behinderten Elektroden, aus EMV (Elektromagnetische Verträglichkeit)-Sicht von Vorteil, da dann das elektromagnetische Fernfeld Null ist. Hier ist die dielektrische Barriere-Entladungslampe EL über zwei Drosseln L, L' zwischen den Mittenpunkten je zweier Serienschaltungen mit je zwei Schalterzweigen in der Art einer Vollbrücke geschaltet. Jeder der vier Schalterzweige besteht aus einer Reihenschaltung aus einem Transistor T1 bis T4 und einer Diode D1 bis D4. Parallel zur Lampe EL ist außerdem ein Kondensator C geschaltet.

Die Figuren 8a - 8c zeigen das Schaltschema der Schaltung aus Fig. 7. Wie Figur 8a zu entnehmen ist, schließen die diagonal angeordneten Schalttransistorpaare T1, T4 bzw. T2, T3 abwechselnd nach einer Pause synchron. Dadurch werden die positiven bzw. negativen Strompulse I_{L} erzeugt, deren Amplituden I_{L+} bzw. I_{L-} in diesem Fall gleich sind. Folglich resultiert ein rechteckförmiges, bezüglich der Nulllinie symmetrisches Spannungssignal U an den Anschlüssen der dielektrischen Barriere-Entladungslampe EL. Die Spannungserhöhung ΔU = Uₘₐₓ - U₀ bezüglich der Zwischenkreisspannung U₀ kann durch die Wahl der Induktivitäten der Drosseln L1, L2 sowie des Kondensators C beeinflusst werden. Da die Dioden D1 bis D4 sperren bevor die Transistoren T1, T4 bzw. T2, T3 öffnen, werden in den Transistoren T1 - T4 Ausschaltverluste vermieden.

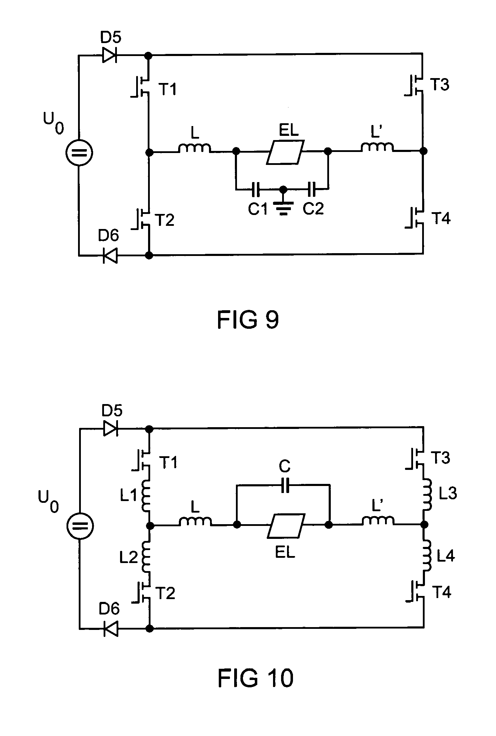

Die Fig. 9 zeigt eine Untervariante des in Fig. 7 dargestellten Vollbrücken-Drosselwandlers. Hier sind die in Fig. 7 eingezeichneten Dioden D1 bis D4 aus den Schalterzweigen herausgezogen und als je eine gemeinsame Diode D5 bzw. D6 in die gemeinsamen Zuleitungen für die Vollbrücken-Schalterzweige geschaltet. Außerdem ist der Kondensator C durch eine Reihenschaltung zweier Kondensatoren C1 und C2 ersetzt, deren Mittenpunkt zur Symmetrisierung der Lampenspannung mit konstantem Potential, beispielsweise Masse, verbunden ist. Auch hier - wie bereits bei der Beschreibung zu Fig. 7 - ist die resultierende symmetrische Lampenspannung bei symmetrischem Aufbau der dielektrischen Barriere-Entladungslampe aus EMV-Sicht von Vorteil.

Die Fig. 10 zeigt eine weitere Untervariante des erfindungsgemäßen Vollbrücken-Drosselwandlers. Sie unterscheidet sich von der in Fig. 9 dargestellten Variante lediglich dadurch, dass in jedem Schalterzweig noch zusätzlich je eine Drossel L1 - L4 geschaltet ist. Dadurch ist es möglich, die Höhe der positiven und negativen Strompulse und folglich die Flanken der Rechteckspannung für die Lampe unterschiedlich zu wählen, indem die Induktivitäten der Drosseln L1 und L4 ungleich zu denen der Drosseln L2 und L3 gewählt werden.

## Patentansprüche

1. Schaltungsanordnung für das gepulste Betreiben einer Entladungslampe, insbesondere einer dielektrischen Barriere-Entladungslampe, mit einem Drosselwandler mit
o einem ersten und einem zweiten Schalterzweig,
- wobei jeder Schalterzweig eine Serienschaltung aus Schalter (S1, S1), Stromventil (D1, D2) und Induktivität (L1, L2) umfasst,
o einem Lampenzweig, der eine mit dem Mittenpunkt der Serienschaltung verbundene Induktivität (L) aufweist,
- wobei der freie Anschluss dieser Induktivität (L) für die Verbindung mit dem ersten Anschluss einer Entladungslampe (EL) vorgesehen ist,
o wobei bis zu zwei der insgesamt drei Induktivitäten (L, L1, L2) auch den Wert Null annehmen können.

2. Schaltungsanordnung nach Anspruch 1, wobei ein konstantes Potential der Schaltungsanordnung, z.B. die Schaltungsmasse, für die Verbindung mit dem zweiten Anschluss der Entladungslampe (EL) vorgesehen ist.

3. Schaltungsanordnung nach Anspruch 1, mit
o einer zusätzlichen Serienschaltung aus einem dritten und einem vierten Schalterzweig, wobei
- die zusätzliche Serienschaltung parallel zu der Serienschaltung aus den beiden ersten Schalterzweigen geschaltet ist,
- der dritte und vierte Schalterzweig jeweils eine Serienschaltung aus Schalter (T3, T4), Stromventil (D3, D4) und Induktivität (L3, L4) umfasst,
o einer Induktivität (L'), die mit dem Mittenpunkt der zusätzlichen Serienschaltung verbunden ist,
- wobei der freie Anschluss dieser Induktivität (L') für die Verbindung mit dem zweiten Anschluss der Entladungslampe (EL) vorgesehen ist,
o wobei alle drei Induktivitäten (L', L3, L4) auch den Wert Null annehmen können.

4. Schaltungsanordnung nach Anspruch 3, die in Bezug auf die für die Verbindung mit einer Entladungslampe (EL) vorgesehenen Anschlüsse symmetrisch aufgebaut ist.

5. Schaltungsanordnung nach Anspruch 3 oder 4, bei der die vier Stromventile (D1 - D4) aus den Schalterzweigen herausgezogen und durch zwei Stromventile (D5, D6), je eine in den beiden Zuleitungen zu der Parallelschaltung der zwei Serienschaltungen mit den insgesamt vier Schalterzweigen, ersetzt sind.

6. Schaltungsanordnung nach einem der Ansprüche 3 bis 5, mit einem Kondensator (C), der mit den für die Verbindung mit einer Entladungslampe (EL) vorgesehen Anschlüsse verbunden ist.

7. Schaltungsanordnung nach Anspruch 6, wobei der Kondensator durch eine Reihenschaltung aus zwei Kondensatoren (C1, C2) ersetzt und der Mittenpunkt dieser Reihenschaltung mit einem konstanten Potential der Schaltungsanordnung, z.B. mit der Schaltungsmasse, verbunden ist.

8. Schaltungsanordnung nach einem der vorstehenden Ansprüche, wobei die Stromventile (D1 - D6) als Dioden, bevorzugt als SiC-Dioden ausgeführt sind.

9. Schaltungsanordnung nach einem der vorstehenden Ansprüche, wobei die Schalter als Transistoren (T1 - T8), bevorzugt als FET, MOSFET oder IGBT ausgeführt sind.

10. Schaltungsanordnung nach einem der vorstehenden Ansprüche, wobei die Induktivitäten (L1 - L4) in den Schalterzweigen als Drosseln ausgeführt sind.

11. Schaltungsanordnung nach einem der vorstehenden Ansprüche, wobei die Induktivität(en) (L, L') im Lampenzweig als Drossel(n) oder als Zuleitung mit geeigneter Zuleitungsinduktivität ausgeführt ist (sind).

12. Schaltungsanordnung nach einem der vorstehenden Ansprüche, wobei in den Schalterzweigen zwei oder mehr Schalter (T1 - T4; T5 - T8) in Reihe geschaltet und zur synchronen Betätigung vorgesehen sind.

13. Beleuchtungssystem mit einer Schaltungsanordnung nach einem der vorstehenden Ansprüche und einer dielektrisch behinderten Entladungslampe (EL), deren zwei Anschlüsse mit den hierfür vorgesehenen Anschlüssen der Schaltungsanordnung verbunden sind.

14. Verfahren zum Betreiben einer Entladungslampe mit einer Schaltungsanordnung nach Anspruch 1 oder 2, wobei die Schalter (S1, S2) der beiden Schalterzweige abwechselnd geschaltet werden, optional jeweils mit einer dazwischen liegenden Pause.

15. Verfahren nach Anspruch 14, wobei das Öffnen der Schalter stromlos erfolgt.

16. Verfahren zum Betreiben einer Schaltungsanordnung nach Anspruch 3, wobei abwechselnd die Schalter (T1, T4; T2, T3) der jeweils zueinander diagonal geschalteten Schalterzweige synchron geschaltet werden, d.h. in der Art einer Vollbrücke.
